# EUROPEAN PATENT APPLICATION

(11) **EP 4 745 374 A1**
(43) Date of publication of application: **20.05.2026**
(21) Application number: 24871325.7
(22) Date of filing: 03.04.2024
(51) Int. Cl.: F02B 19/12, F02B 25/00, F02B 27/00, F02B 75/28, F02M 67/06, F02M 67/14, F02M 69/10

(54) **TWO-CYCLE ENGINE**

(30) Priority: 29.09.2023 JP 2023169471
(71) Applicant: Maruyama MFG. Co., Inc., Tokyo 101-0047 (JP)
(72) Inventor: YASUDA, Terutaka, Tokyo 101-0047 (JP)
(74) Representative: Grünecker Patent- und Rechtsanwälte PartG mbB
(86) International application number: PCT/JP2024/013836
(87) International publication number: WO 2025/069509

(57) **Abstract**

In a two-cycle engine, a cylinder is provided with: an intake port communicating with a crank chamber via a bore portion; an exhaust port communicating with the bore portion and disposed so as to face the intake port in a radial direction of the bore portion; at least one scavenging port communicating the bore portion with the crank chamber; and an injector having an injection hole communicating with the bore portion and injecting fuel containing hydrogen into the bore portion. The injector injects the fuel into the bore portion in accordance with a timing at which the exhaust port is closed in an ascending process in which a piston moves from bottom dead center to top dead center.

## Description

### Technical Field

The present disclosure relates to a two-cycle engine that operates using hydrogen as fuel.

### Background Art

As described in Patent Literature 1, a two-cycle engine configured to connect a hydrogen passage of a hydrogen injector to a fuel passage of a fuel injector and inject fuel and hydrogen at a predetermined timing is known. In this engine, hydrogen is injected after a scavenging passage opens, and the injection of hydrogen is terminated before the scavenging passage closes. Fuel accumulating in the fuel passage is supplied to a combustion chamber via the scavenging passage by the injection of hydrogen. Ignitability of the fuel is improved by the mixing of hydrogen.

### Citation List

### Patent Literature

[Patent Literature 1] Japanese Unexamined Patent Application Publication No. H03-18664

### Summary of Invention

### Technical Problem

In the above-described two-cycle engine, a phenomenon called "pre-ignition" in which fuel containing hydrogen ignites before a spark (discharge) of a spark plug may occur. Normally, ignition of an air-fuel mixture is performed at an appropriate timing by the spark of the spark plug. However, in a case where hydrogen fuel is included, the air-fuel mixture ignites spontaneously (self-ignition phenomenon) because ignitability of hydrogen fuel is high. Such pre-ignition can cause malfunctions such as stoppage of the engine, unstable rotation or reverse rotation of the engine, or damage to the engine. In a two-cycle engine operating using hydrogen as fuel, it has been difficult to realize stable operation.

The present disclosure describes a two-cycle engine capable of realizing stable operation even when hydrogen fuel is used.

### Solution to Problem

[1] One aspect of the present disclosure is a two-cycle engine (1) including: a cylinder (2) provided with a bore portion (3) and a combustion chamber (11) connected to one side in an axis (L) direction of the bore portion (3); a crankcase (6) disposed on the other side in the axis (L) direction of the cylinder (2) and provided with a crank chamber (6a) connected to the other side of the bore portion (3); a piston (4) disposed in the bore portion (3) and capable of reciprocating along the axis (L) direction between the combustion chamber (11) and the crank chamber (6a); and a connecting rod (10) connecting a crankshaft (7a) disposed in the crank chamber (6a) and the piston (4), wherein the cylinder (2) is provided with an intake port (12) communicating with the crank chamber (6a) via the bore portion (3), an exhaust port (13) communicating with the bore portion (3) and disposed so as to face the intake port (12) in a radial direction of the bore portion (3), at least one scavenging port (14, 16) communicating the bore portion (3) with the crank chamber (6a), and an injector (30) having an injection hole (31) communicating with the bore portion (3) and injecting fuel containing hydrogen into the bore portion (3), and the injector (30) injects the fuel into the bore portion (3) in accordance with a timing at which the exhaust port (13) is closed in an ascending process in which the piston (4) moves from bottom dead center to top dead center.
   According to the two-cycle engine (1) of [1], the fuel containing hydrogen is injected into the bore portion (3) by the injector (30) in accordance with the timing at which the exhaust port (13) is closed. In the ascending process of the piston (4), a scavenging process of introducing fresh air (air) is completed, and thereafter the exhaust port (13) is also closed. High-temperature exhaust gas is discharged from the exhaust port (13), and the fuel is injected in accordance with the timing at which the exhaust port (13) is closed (that is, a completion timing of an exhaust process). At this point in time, discharge of high-temperature combusted exhaust gas has been completed, and further, a temperature inside the cylinder (2) has decreased due to introduction of low-temperature fresh air (air) in the scavenging process. Therefore, the fuel can be introduced into the combustion chamber (11) in an environment having a temperature equal to or lower than a self-ignition temperature of the fuel. As a result, it is possible to prevent the self-ignition phenomenon from occurring before the timing of the spark (discharge) of the spark plug, and it is possible to realize stable operation.
[2] In the two-cycle engine (1) of the above [1], the injection hole (31) of the injector (30) may open to the bore portion (3) at the same position as an edge on one side of the exhaust port (13) in the axis (L) direction or slightly higher than the edge. Although a temperature of the fresh air becomes high due to compression, according to this configuration, since an injection position of the fuel can be made as close as possible to a position of the exhaust port (13) in the axis (L) direction, the fuel can be located in a low-temperature environment simultaneous with start of compression of the fresh air. In other words, the injection position of the fuel can be kept away from a position close to the combustion chamber (11) which becomes high pressure and high temperature. Thereby, since low-temperature hydrogen can be introduced into the bore portion (3) in the low-temperature environment, a temperature rise due to compression can be prevented, and the self-ignition phenomenon can be prevented more reliably.
[3] In the two-cycle engine (1) of the above [1] or [2], the injector (30) may be attached to the cylinder (2) at a position adjacent to one side of the intake port (12) in the axis (L) direction. According to this configuration, since the injector (30) can be attached at a position far from the combustion chamber (11) (that is, a position where there is not yet a pressure rise in the bore portion (3) at the start of compression), the injector (30) for low pressure which is inexpensive is applicable. Although an injector with specifications to withstand high pressure and high temperature causes an increase in cost, according to the above configuration, the increase in cost can be suppressed.
[4] In the two-cycle engine (1) of any one of the above [1] to [3], a connection position (C) of the piston (4) with the connecting rod (10) may be offset to the intake port (12) side with respect to a straight line (A1) passing through a rotation center (R) of the crankshaft (7a) and parallel to a reciprocating direction of the piston (4). Due to the offset of the connection position (C), the exhaust port (13) can be opened at an earlier crank angle. Since the high-temperature exhaust gas can be discharged quickly because an opening timing of the exhaust port (13) is early, the high-temperature combusted gas can be reliably discharged with high exhaust efficiency, and the self-ignition phenomenon can be prevented more reliably.

### Effects of Invention

According to the present disclosure, even when hydrogen fuel is used, the self-ignition phenomenon can be prevented, and stable operation can be realized.

### Brief Description of Drawings

FIG. 1 is a side view of a two-cycle engine according to an embodiment of the present disclosure.
FIG. 2 is a longitudinal sectional view along line II-II of FIG. 1.
FIG. 3 is a block diagram showing a schematic configuration related to fuel injection control.
FIG. 4 is a longitudinal sectional view showing a state where a piston is located at bottom dead center.
FIG. 5 is a longitudinal sectional view along line V-V of FIG. 4.
FIG. 6 is a longitudinal sectional view showing a state where an exhaust port is closed in an ascending process (completion timing of an exhaust process).
FIG. 7 is a sectional view enlarging a part of FIG. 6.
FIG. 8 is a longitudinal sectional view along line VIII-VIII of FIG. 4.

### Description of Embodiments

Hereinafter, embodiments of the present disclosure will be described with reference to the drawings. In the description of the drawings, the same elements are denoted by the same reference signs, and overlapping description is omitted. When "upper and lower" is used in the following description, reference is made to a state where a cylinder body 2a is set upright so that a bore portion 3 of a cylinder 2 extends in a vertical direction with an opening portion into which a piston 4 is inserted facing downward. "Upper" corresponds to one side in an axis L direction of the bore portion 3, and "lower" corresponds to a lower side in the axis L direction.

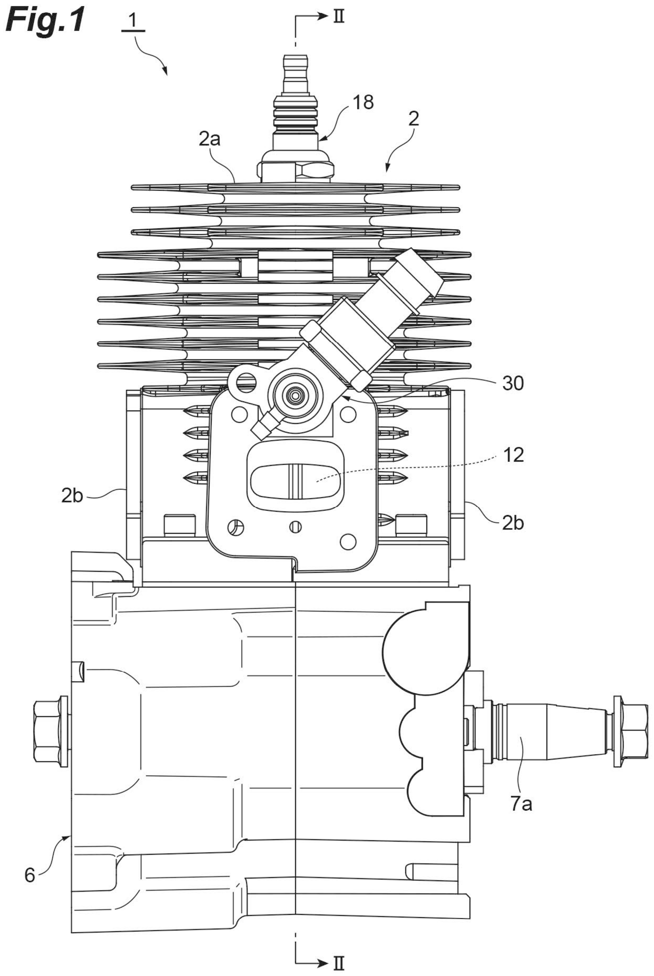

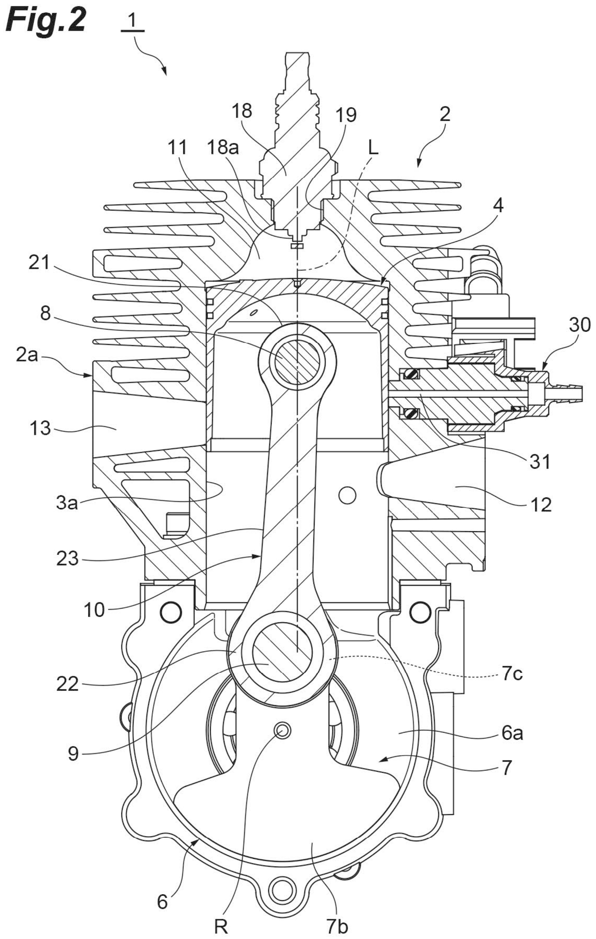

As shown in FIGS. 1 and 2, an engine (two-cycle engine) 1 is a two-cycle engine adopting a Schnuerle method as a scavenging method, and is equipped in, for example, a brush cutter, a knapsack power duster, or the like. The engine 1 includes the cylinder 2, the piston 4 reciprocating in the bore portion 3 in the cylinder 2, a crankcase 6 connected to a lower part of the cylinder 2 and provided with a crank chamber 6a connected to the bore portion 3, and a crank mechanism 7 disposed in the crank chamber 6a of the crankcase 6. A piston pin 8 provided in the piston 4 and a crank pin 9 of the crank mechanism 7 provided in the crankcase 6 are connected by a connecting rod 10. Thereby, the connecting rod 10 connects a crankshaft 7a disposed in the crank chamber 6a and the piston 4. The piston 4 is disposed in the bore portion 3 and is capable of reciprocating along the axis L direction between a combustion chamber 11 and the crank chamber 6a. In the following description, the connecting rod 10 is referred to as a con-rod 10.

In the cylinder 2, the combustion chamber 11, the cylindrical bore portion 3 connected to the combustion chamber 11 and into which the piston 4 is inserted, an intake port 12 and an exhaust port 13 communicating with the bore portion 3, and a pair of intake-side scavenging ports 14 and a pair of exhaust-side scavenging ports 16 are formed. The cylinder 2 has the cylinder body 2a and a pair of scavenging cassettes 2b fitted into a lower part of the cylinder body 2a. The pair of scavenging cassettes 2b are fitted and fixed into two openings formed so as to face each other in a radial direction of the bore portion 3. The pair of intake-side scavenging ports 14 and the pair of exhaust-side scavenging ports 16 are formed by, for example, the cylinder body 2a and the pair of scavenging cassettes 2b (see FIG. 2).

The bore portion 3 has a columnar bore surface 3a and extends inside the cylinder 2 along the axis L direction. The bore portion 3 is open on its bottom dead center side (lower side in FIG. 2) and communicates with the crank chamber 6a. A recessed combustion chamber 11 is formed at an end portion on a top dead center side of the bore portion 3, and a discharge electrode 18a of a spark plug 18 is disposed inside the combustion chamber 11. A spark plug attachment hole 19 to which the spark plug 18 is attached is provided in the vicinity of the combustion chamber 11 of the cylinder body 2a.

The intake port 12 and the exhaust port 13 communicate with the bore portion 3 respectively, and the exhaust port 13 is disposed slightly closer to the top dead center side than the intake port 12 in the axis L direction. The intake port 12 and the exhaust port 13 are disposed so as to face each other in the radial direction of the bore portion 3. In other words, the intake port 12 and the exhaust port 13 are disposed shifted from each other by approximately 180° in a circumferential direction of the bore portion 3.

The intake-side scavenging ports 14 are for introducing fresh air into the bore portion 3 and the combustion chamber 11 in the scavenging process, and extend inside a side wall of the cylinder 2 along the axis L direction. In the present embodiment, the fresh air is only air sucked via an air cleaner (not shown) or the like. End portions on the top dead center side of the intake-side scavenging ports 14 communicate with the bore portion 3 respectively at positions substantially similar to the exhaust port 13 in the axis L direction. The intake-side scavenging ports 14 are disposed spaced apart from each other in the circumferential direction of the bore portion 3. More specifically, the intake-side scavenging ports 14 are disposed substantially line-symmetrically with respect to a virtual line connecting the intake port 12 and the exhaust port 13 in the radial direction. The intake-side scavenging ports 14 are provided so that the fresh air introduced into the bore portion 3 is directed toward the intake port 12. End portions on the bottom dead center side of the intake-side scavenging ports 14 communicate with the above-described crank chamber 6a.

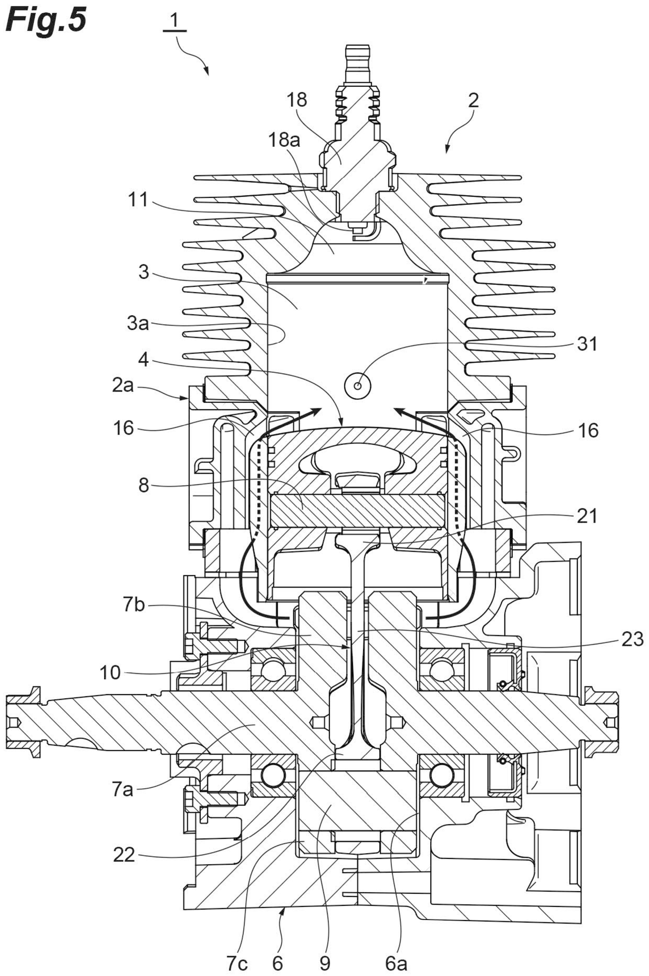

As shown in FIG. 2, the crank mechanism 7 has the crankshaft 7a, a pair of crank webs 7b connected to the crankshaft 7a, and a pair of connecting portions 7c (see also FIG. 5) provided on an opposite side of the crank webs 7b in the radial direction. The con-rod 10 has a small end portion 21 disposed in the bore portion 3, a large end portion 22 disposed in the crank chamber 6a, and a rod body 23 connecting the small end portion 21 and the large end portion 22. The piston pin 8 is inserted through the small end portion 21 of the con-rod 10, and the small end portion 21 is rotatably connected to the piston 4 via the piston pin 8. The crank pin 9 is inserted through the large end portion 22 of the con-rod 10, and the large end portion 22 is rotatably connected to the connecting portion 7c of the crank mechanism 7 via the crank pin 9. When the crankshaft 7a is rotationally driven around a rotation center R, a connection center P of the con-rod 10 with respect to the crankshaft 7a moves circularly around the rotation center R of the crankshaft 7a.

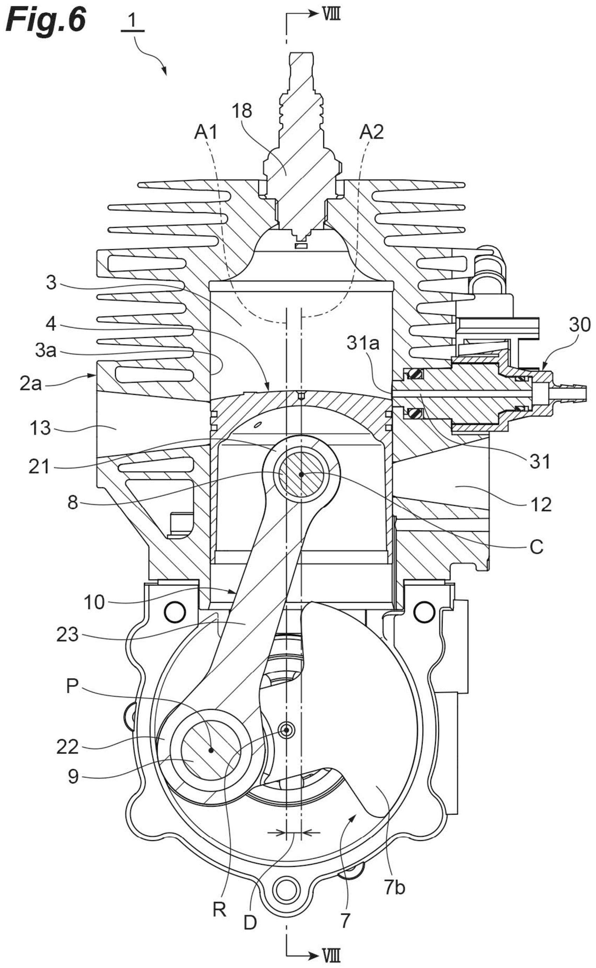

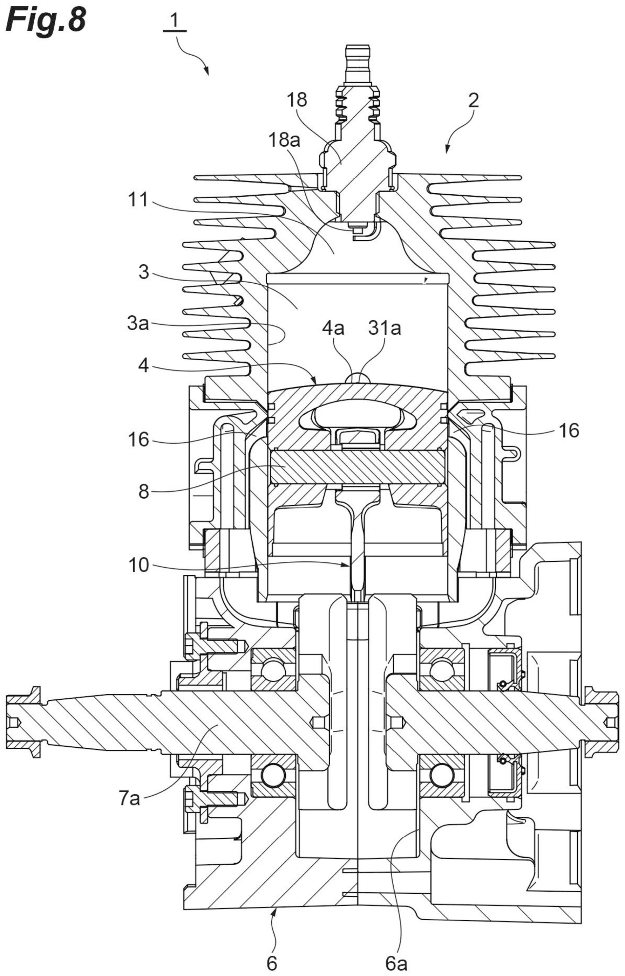

Subsequently, details of the position of the piston 4 will be described with reference to FIG. 6. FIG. 6 is a longitudinal sectional view showing a state where the exhaust port 13 is closed (that is, a closed state) in the ascending process of the piston 4. As shown in FIG. 6, a connection position C of the piston 4 with the con-rod 10 is offset to the intake port 12 side with respect to a straight line A1 passing through the rotation center R of the crankshaft 7a (see FIG. 8) and parallel to a reciprocating direction of the piston 4 (that is, parallel to the axis L of the bore portion 3) (see an offset distance D shown in the drawing). From another viewpoint, the connection position C is on a central axis A2 of the piston 4, and the exhaust port 13 is provided on a side opposite to a side where the connection position C is offset across the straight line A1. The central axis A2 of the piston 4 coincides with the axis L of the bore portion 3. Note that the axis L of the bore portion 3 may be located at any position in the circumferential direction (at any position in a range of 360°) as long as the position of the exhaust port 13 in a height direction is maintained.

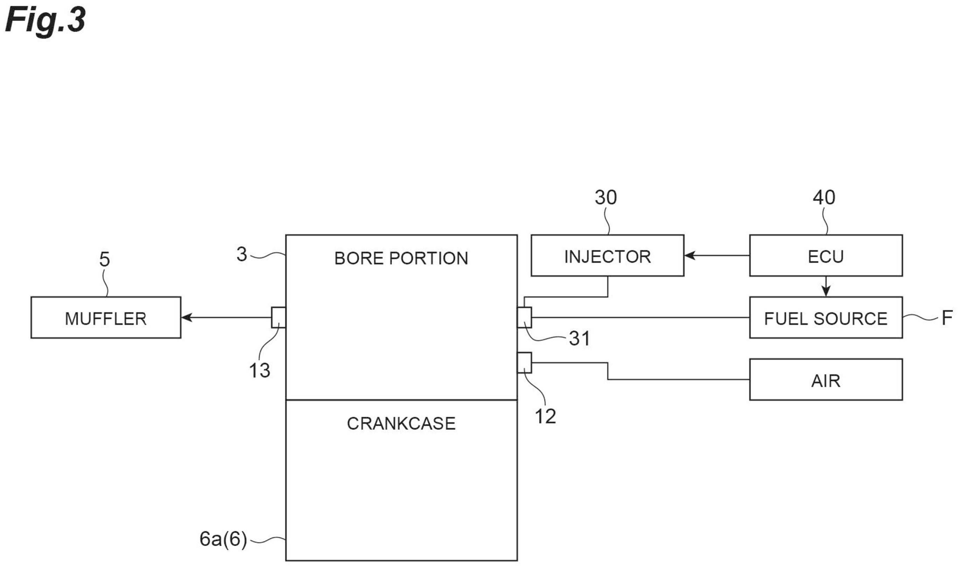

The engine 1 is a piston valve type two-cycle engine in which the intake port 12 is opened and closed by the piston 4 reciprocating in the bore portion 3. In the engine 1, air sucked from the intake port 12 passes through the crank chamber 6a and is introduced into the bore portion 3 through the pair of intake-side scavenging ports 14 and the pair of exhaust-side scavenging ports 16. In the engine 1 of the present embodiment, hydrogen fuel is used. The hydrogen fuel is injected (introduced) from a fuel source F (see FIG. 3) into the bore portion 3. That is, the hydrogen fuel is directly injected into the bore portion 3 without passing through any of the crank chamber 6a, the pair of intake-side scavenging ports 14, and the pair of exhaust-side scavenging ports 16.

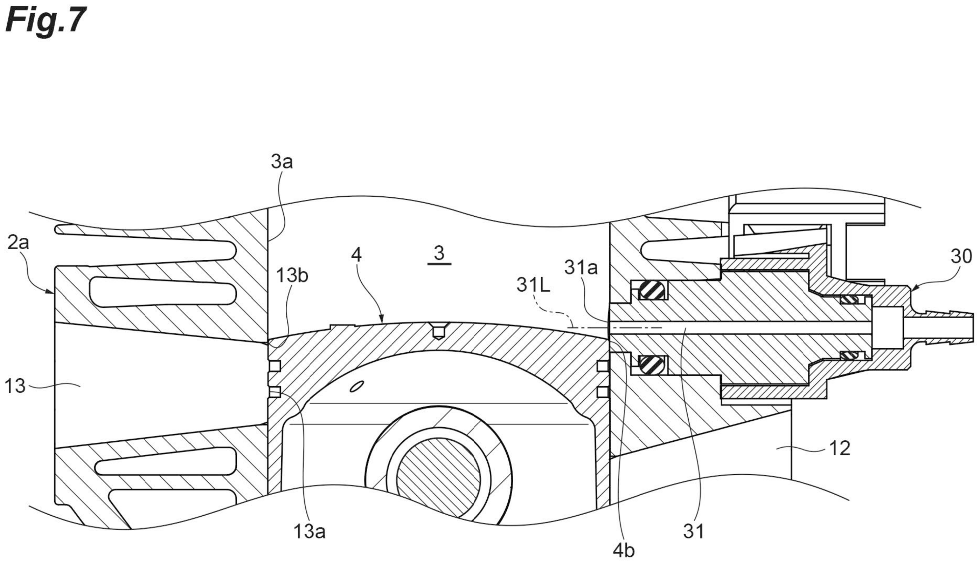

As shown in FIGS. 1 and 2, the cylinder 2 is provided with an injector 30 that injects the hydrogen fuel into the bore portion 3. The injector 30 is attached to the cylinder 2 at a position adjacent to an upper side (one side) of the intake port 12 in the axis L direction. The injector 30 is fixed to the cylinder 2 by an appropriate fastening member or the like. The injector 30 has an injection hole 31 communicating with the bore portion 3. A center line 31L (see FIG. 7) of the injection hole 31 is directed, for example, in a position and a direction orthogonal to the axis L of the bore portion 3 (that is, a radial direction). A valve such as a coil-type electromagnetic valve (not shown) is built in the injector 30. The valve opens and closes a flow path of fuel connected to the injection hole 31.

As shown in FIG. 7, the injection hole 31 extends toward the center (axis L) of the bore portion 3. The injection hole 31 opens to the bore portion 3 at a position slightly higher than an upper end (edge) 13b of an opening 13a of the exhaust port 13 in the axis L direction. More specifically, the center line 31L of the injection hole 31 is located at a position slightly higher than the upper end 13b of the opening 13a. To describe the matter of "located at a position slightly higher" in more detail, for example, a difference (distance) in position in the axis L direction between the upper end 13b of the opening 13a and the center line 31L of the injection hole 31 is preferably within a range of 20% or less of a distance from a closed position of the exhaust port 13 (that is, the above-described upper end 13b) to the top dead center. Note that the injection hole 31 may open to the bore portion 3 at the same position as the upper end (edge) 13b of the opening 13a of the exhaust port 13 in the axis L direction. In that case, the center line 31L of the injection hole 31 may coincide with the position of the upper end 13b of the opening 13a.

In the present embodiment, hydrogen fuel is used. The hydrogen fuel is stored in the fuel source F constituted by a pressure tank or the like in a state of compressed gas. Note that in the engine 1, a mixed gas of hydrogen and another fuel may be used. In the present specification, "fuel containing hydrogen" includes both hydrogen fuel consisting of only hydrogen (100% hydrogen) and mixed fuel of hydrogen and another fuel. According to the engine 1 of the present embodiment which has solved the problem of the self-ignition phenomenon (pre-ignition) in the case of using hydrogen fuel, the problem of the self-ignition phenomenon is easily solved even when mixed fuel containing hydrogen is used, and normal operation becomes possible.

FIG. 3 is a block diagram showing a schematic configuration related to fuel injection control. As shown in FIG. 3, in the engine 1, only air not containing hydrogen fuel is sucked from the intake port 12. An ECU (Engine Control Unit) 40 controls the engine 1. The ECU 40 controls the amount of air by adjusting an opening degree of a throttle valve (not shown), and also controls the injector 30. The ECU 40 controls a timing at which the hydrogen fuel is injected by the injector 30. A pressure adjustment valve (regulator) (not shown) is provided between the fuel source F and the injector 30. The pressure adjustment valve always keeps a pressure of the hydrogen fuel applied to the injector 30 constant. The ECU 40 is capable of precisely controlling an injection timing and an injection time (opening time of the injector 30) of the fuel by the injector 30. Thereby, a supply amount of introduced hydrogen can also be precisely controlled. Note that the exhaust gas discharged from the exhaust port 13 is released to the atmosphere through a muffler 5.

In the present embodiment, the injector 30 is controlled by the ECU 40 to inject the hydrogen fuel into the bore portion 3 in accordance with the timing at which the exhaust port 13 is closed in the ascending process in which the piston 4 moves from bottom dead center to top dead center. Although the injector 30 needs to be able to inject fuel at a pressure higher than an internal pressure of the bore portion 3, since the internal pressure of the bore portion 3 is substantially the same as atmospheric pressure at the closing timing of the exhaust port 13 described above, it is sufficient for the injector 30 to inject the hydrogen fuel at a low pressure. As the injector 30, a general-purpose product can be used.

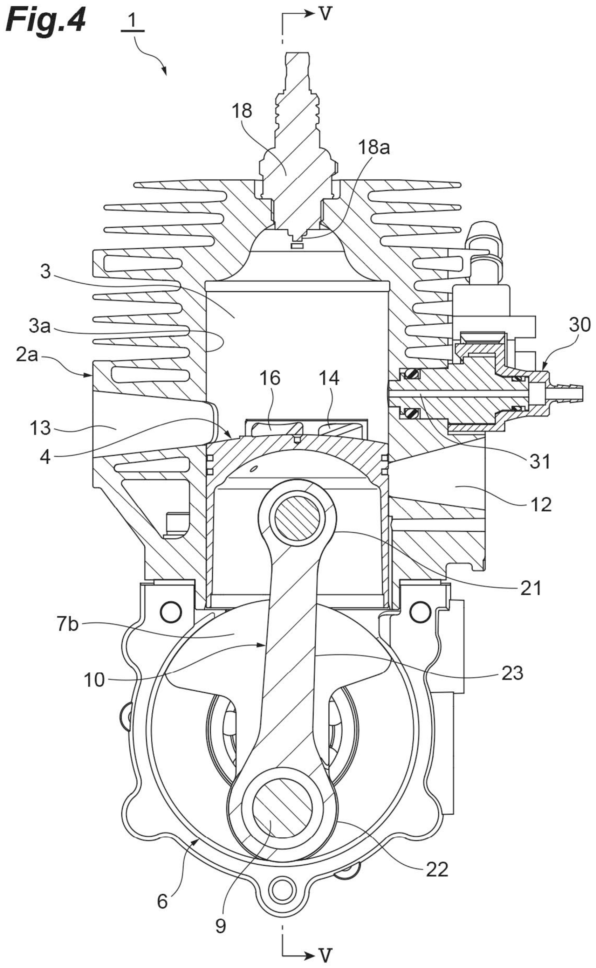

Subsequently, an operation in the engine 1 will be described. As shown in FIG. 2, when the piston 4 reaches the vicinity of top dead center, the air-fuel mixture explodes in the combustion chamber 11, and the piston 4 descends to the bottom dead center side. When the descent of the piston 4 further proceeds, the exhaust port 13 is opened, and combustion gas is exhausted. Then, slightly delayed from the opening of the exhaust port 13, the intake-side scavenging ports 14 and the exhaust-side scavenging ports 16 are exposed in the bore portion 3, and a scavenging stroke is started (see FIGS. 4 and 5).

Subsequently, along with the ascent of the piston 4 from bottom dead center toward top dead center, the intake-side scavenging ports 14 and the exhaust-side scavenging ports 16 are closed by the piston 4. Then, the exhaust port 13 is also closed by the piston 4. As shown in FIGS. 6 and 8, at the timing at which the exhaust port 13 is closed in the ascending process of the piston 4, the injector 30 is controlled by the ECU 40 to inject the hydrogen fuel into the bore portion 3. Thereby, air and the hydrogen fuel are mixed, and an air-fuel mixture is generated. As shown in FIGS. 6, 7, and 8, at the time of injection of the hydrogen fuel, the opening 13a of the exhaust port 13 is closed, but an opening 31a of the injection hole 31 is open. A top portion 4a of the piston 4 is slightly higher than a peripheral edge portion 4b of the piston 4. At this time, as shown in FIG. 8, when viewed from a direction orthogonal to the axis L (a direction facing the injector 30), the opening 31a of the injection hole 31 is visible slightly above the top portion 4a of the piston 4 or is hidden by the top portion 4a of the piston 4.

An injection timing of the hydrogen fuel may be when the upper end 13b of the opening 13a of the exhaust port 13 is closed by the piston 4, or may be slightly before or after that. Specifically, a timing allowed "before" the closing of the exhaust port 13 is, for example, a timing that does not cause "blow-by" in which the hydrogen fuel introduced into the bore portion 3 escapes to the exhaust port 13 as it is. A timing allowed "after" the closing of the exhaust port 13 is, for example, a timing at which the internal pressure of the bore portion 3 starts to rise due to compression after the closing of the exhaust port 13. In this way, the injector 30 injects the hydrogen fuel into the bore portion 3 in accordance with the timing at which the exhaust port 13 is closed in the ascending process of the piston 4. From another viewpoint, at least before the peripheral edge portion 4b of the piston 4 completely closes the opening 31a of the injection hole 31, the injector 30 injects the hydrogen fuel into the bore portion 3.

Due to further ascent of the piston 4, the air-fuel mixture in the combustion chamber 11 is compressed. Due to the further ascent of the piston 4, the intake port 12 communicates with the crank chamber 6a via the bore portion 3, and fresh air (air) is introduced into the crank chamber 6a (see FIG. 2).

According to the engine 1 of the present embodiment, the fuel containing hydrogen is injected into the bore portion 3 by the injector 30 in accordance with the timing at which the exhaust port 13 is closed. In the ascending process of the piston 4, the scavenging process of introducing fresh air (air) is completed, and thereafter the exhaust port 13 is also closed. High-temperature exhaust gas is discharged from the exhaust port 13, and the fuel is injected in accordance with the timing at which the exhaust port 13 is closed (that is, the completion timing of the exhaust process). At this point in time, discharge of high-temperature combusted exhaust gas has been completed, and further, the temperature inside the cylinder 2 has decreased due to introduction of low-temperature fresh air (air) in the scavenging process. Therefore, the fuel can be introduced into the combustion chamber 11 in an environment equal to or lower than the self-ignition temperature of the fuel. As a result, it is possible to prevent the self-ignition phenomenon from occurring before the timing of the spark (discharge) of the spark plug, and it is possible to realize stable operation.

The injection hole 31 of the injector 30 opens to the bore portion 3 at the same position as the edge on one side of the exhaust port 13 in the axis L direction or slightly higher than the edge. Thereby, in the axis L direction, the injection position of the fuel can be made as close as possible to the position of the exhaust port 13. In other words, the injection position of the fuel can be kept away from the position close to the combustion chamber 11 which becomes high pressure and high temperature. Thereby, since low-temperature hydrogen can be introduced into the bore portion 3 in the low-temperature environment, an excessive temperature rise due to compression can be prevented, and the self-ignition phenomenon can be prevented more reliably.

The injector 30 is attached to the cylinder 2 at a position adjacent to one side of the intake port 12 in the axis L direction. Thereby, since the injector (30) can be attached at a position far from the combustion chamber (11) (that is, a position where there is not yet a pressure rise in the bore portion 3 at the start of compression), an inexpensive low-pressure injector (30) is applicable. Although an injector with specifications to withstand high pressure and high temperature causes an increase in cost, according to the above configuration, the increase in cost can be suppressed.

The connection position C of the piston 4 with the connecting rod 10 is offset to the intake port 12 side with respect to the straight line A1 passing through the rotation center R of the crankshaft 7a and parallel to the reciprocating direction of the piston 4. Due to the offset of the connection position C, the exhaust port 13 can be opened at an earlier crank angle. Since the high-temperature exhaust gas can be discharged quickly because the opening timing of the exhaust port 13 is early, the self-ignition phenomenon can be prevented more reliably. Further, since the exhaust port 13 is closed at an earlier crank angle due to the offset, a decrease in compression ratio can be prevented by the early closing of the exhaust port 13 while maintaining high exhaust efficiency due to the early opening of the exhaust port 13. A decrease in output due to the decrease in compression ratio can be prevented.

Although the embodiment of the present disclosure has been described above, the present invention is not limited to the above embodiment. For example, the injector 30 may be attached at a position away from the cylinder 2. The position of the injection hole 31 may be closer to the combustion chamber 11 than the injection hole 31 of the above embodiment.

The piston 4 may be configured without offset, and the connection position C may be located on the straight line A1.

The present invention is not limited to the case where four scavenging ports of the pair of intake-side scavenging ports 14 and the pair of exhaust-side scavenging ports 16 are provided in the cylinder 2, and a configuration in which one intake-side scavenging port 14 and one exhaust-side scavenging port 16 are provided may be adopted. The present invention is also applicable to a stratified scavenging engine of a type using air. Further, only a pair of scavenging ports facing each other in the radial direction may be provided between the intake port 12 and the exhaust port 13. Only one scavenging port may be provided for the cylinder 2.

### Reference Signs List

- 1: Engine (two-cycle engine)
- 2: Cylinder
- 3: Bore portion
- 4: Piston
- 6: Crankcase
- 6a: Crank chamber
- 7: Crank mechanism
- 11: Combustion chamber
- 12: Intake port
- 13: Exhaust port
- 13a: Opening
- 13b: Upper end
- 14: Intake-side scavenging port (scavenging port)
- 16: Exhaust-side scavenging port (scavenging port)
- 30: Injector
- 31: Injection hole
- A1: Straight line
- A2: Central axis
- C: Connection position
- D: Offset distance
- L: Axis (of bore portion)
- P: Connection center
- R: Rotation center

## Claims

1. A two-cycle engine (1) comprising:
a cylinder (2) provided with a bore portion (3) and a combustion chamber (11) connected to one side in an axis (L) direction of the bore portion (3);
a crankcase (6) disposed on the other side in the axis (L) direction of the cylinder (2) and provided with a crank chamber (6a) connected to the other side of the bore portion (3);
a piston (4) disposed in the bore portion (3) and capable of reciprocating along the axis (L) direction between the combustion chamber (11) and the crank chamber (6a); and
a connecting rod (10) connecting a crankshaft (7a) disposed in the crank chamber (6a) and the piston (4),
wherein the cylinder (2) is provided with:
an intake port (12) communicating with the crank chamber (6a) via the bore portion (3);
an exhaust port (13) communicating with the bore portion (3) and disposed so as to face the intake port (12) in a radial direction of the bore portion (3);
at least one scavenging port (14, 16) communicating the bore portion (3) with the crank chamber (6a); and
an injector (30) having an injection hole (31) communicating with the bore portion (3) and injecting fuel containing hydrogen into the bore portion (3), and
wherein the injector (30) injects the fuel into the bore portion (3) in accordance with a timing at which the exhaust port (13) is closed in an ascending process in which the piston (4) moves from bottom dead center to top dead center.

2. The two-cycle engine according to claim 1, wherein the injection hole (31) of the injector (30) opens to the bore portion (3) at the same position as an edge on one side of the exhaust port (13) in the axis (L) direction or slightly higher than the edge.

3. The two-cycle engine according to claim 1 or 2, wherein the injector (30) is attached to the cylinder (2) at a position adjacent to one side of the intake port (12) in the axis (L) direction.

4. The two-cycle engine according to any one of claims 1 to 3, wherein a connection position (C) of the piston (4) with the connecting rod (10) is offset to the intake port (12) side with respect to a straight line (A1) passing through a rotation center (R) of the crankshaft (7a) and parallel to a reciprocating direction of the piston (4).
